# EUROPÄISCHE PATENTSCHRIFT

(11) **EP 0 641 479 B1**
(45) Veröffentlichungstag und Bekanntmachung des Hinweises auf die Patenterteilung: **10.02.1999**
(21) Anmeldenummer: 94907478.5
(22) Anmeldetag: 09.03.1994
(51) Int. Cl.: G11B 33/04

(54) **KOMBINATIONSSYSTEM ZUR AUFNAHME VON ETUIVERPACKTEN COMPACT-DISCS**
COMBINATION SYSTEM FOR HOLDING BOXED COMPACT DISKS
SYSTEME COMBINE POUR CONTENIR DES DISQUES COMPACTS EMBALLES DANS LEUR ETUI

(30) Priorität: 19.03.1993 CH 834/93; 23.09.1993 CH 2866/93
(43) Veröffentlichungstag der Anmeldung: 08.03.1995
(73) Patentinhaber: HESENER, Walter, CH-1217 Meyrin (CH)
(72) Erfinder: HESENER, Walter, CH-1217 Meyrin (CH); HESENER, Ursula, CH-6906 Lugano-Cassarate (CH)
(86) Internationale Anmeldenummer: CH9400051
(87) Internationale Veröffentlichungsnummer: WO9422141

(56) Entgegenhaltungen:
- EP-A- 0 183 645
- WO-A-90/13246
- WO-A-92/10123
- WO-A-92/11787
- US-A- 4 912 863
- US-A- 5 050 734

## Beschreibung

Die Erfindung betrifft ein Kombinationssystem zur Aufnahme von in Scharnierdeckel-Etuis (nachfolgend kurz CD-Etuis genannt) verpackten Compact-Discs, welches rechteckige Kombinationsplatten und zu deren gegenseitiger Befestigung laschenartige Verbindungsmittel aufweist, wobei die Kombinationsplatten vorderseitig mit winkelartigen, lagerbett-bildenden Anformungen zur Lagesicherung der CD-Etuis versehen sind.

Ein vorbekanntes System dieser Art besteht aus extrudierten Profilplatten mit vorderseitig angeformten, zwischen sich eine Mehrzahl von horizontalen Längskanälen zum Einstecken der CD-Etuis bildenden T-Stegen. Zu gegenseitiger Befestigung zwecks Bildung einer Plattenkombination benachbart übereinander anzuordnender Profilplatten dienen in senkrechter Ausrichtung mit diesen zu verschraubende sogenannte Zwischenstücke (Schraublaschen). Dieses System besitzt verschiedenste Nachteile. Die Profilplatten müssen auf Länge geschnitten, entgratet und gebohrt werden. Das sind konstenaufwendige Arbeitsgänge. Das Erstellen von Schraubverbindungen ist für den Endverbraucher umständlich. Die grosse Bemessung der Profilplatten schränkt die Kombinationsmöglichkeiten ein. Beim plazierten Etui lässt sich dessen mit seinen waagerechten Randbereichen von T-Profilen des entsprechenden Längskanals übergriffene Deckel nicht öffnen. Somit muss zur Entnahme der CD zunächst das Etui aus dem gegenüber diesem etwas höheren Längskanal (Lagerbett) herausgehoben d.h. angehoben und nach vorne herausgeschwenkt werden. Das Ganze wirkt ähnlich einer mit Compact-Discs bestückten Wand eines Verkaufsraumes, also wenig dekorativ.

Ein weiteres vorbekanntes System weist schmale, waagerecht zu plazierende Schienen auf, die durch senkrechte Verbindungsstreifen (Verbindungslaschen) in einem sich durch das kürzere Etui-Seitenmass ergebenden Abstand übereinander zu montieren sind. Fertigung und Montage sind wiederum umständlich und aufwendig und die Kombinationsmöglichkeiten eingeschränkt. Auch bezüglich Etuiplazierung, Disc-Entnahme und Dekorationswert ist dieses System mit dem vorerwähnten vergleichbar. Es wundert nicht, dass von diesen beiden Produkten keines für Wohnräume akzeptiert wurde.

Der Erfindung liegt die Aufgabe zugrunde, ein Kombinationssystem eingangs genannter Gattung mit einfachsten Mitteln universeller, preiswerter und gebrauchsfreundlicher zu gestalten.

Die Erfindung besteht darin, dass den Kombinationsplatten vorderseitig je jeweils für nur ein CD-Etui bemessenes Lagerbett entlang einer Lagerbettumfangsseite ein vorspringender, zum Lagerbett hin offener und in seiner Längsrichtung gegenüber der Länge genannter Lagerbettumfangsseite beidseitig kürzerer Winkel zum Uebergriff eines scharnierseitigen Randbereichs eines plazierten CD-Etuis angeformt ist, während sich im Bereich der zum genannten Winkel parallelen Lagerbettumfangsseite eine zum Lagerbett hin wirkende Rastzunge zum Uebergriff eines vorspringenden Bodenrandes des CD-Etuis befindet; und dass die Kombinationsplatten rückseitig im Bereich einer jeden Seitenkante wenigstens einen angeformten Lagersitz für mit Gegenlagersitzen versehene Verbindungslaschen aufweist, wobei teils den Lagersitzen und teils den Gegenlagersitzen in der Art von Vor- und Rücksprüngen miteinander korrespondierende, selbstfedernd wirkende Rastverbindungen bildende Rastmittel angeformt sind.

Solche Kombinationsplatten und Verbindungslaschen sind im Spritz-Press-Verfahren gebrauchsfertig aus thermoplastischem Material herstellbar. Die den Kombinationsplatten und Verbindungslaschen angeformten und mit selbstfedernden Rastmitteln versehenen Lager- resp. Gegenlagersitze erlauben bei einfachster Handhabung die Erstellung vielseitigster geometrischer bzw. räumlicher Kombinationen.

Der Deckel eines jeden plazierten, in keiner Weise manipulierten CD-Etuis lässt sich öffnen,d.h. bei Disc-Entnahme verbleibt das Etui im Lagerbett seiner Kombinationsplatte. Das ist nicht nur äusserst praktisch, sondern dient zugleich der Ordnung und verhütet weitgehend Verwechslungen zwischen CDs und Etuis. Alternativ ist bei Bedarf auf ebenso einfache Weise das Etui zu entnehmen bzw. wieder zu plazieren.

Bezüglich der das Kombinieren der Kombinationsplatten mittels Verbindungslaschen betreffenden erfindungsgemässen Ausbildung dieser Organe wird auf die WO-A-92/10123 verwiesen. Durch diese sind entsprechende technische Mittel an sich, d.h. ausschliesslich auf Bilderrahmen bezogen, vorbekannt.

In der Zeichnung sind Ausführungsbeispiele der Erfindung dargestellt, aus deren Figurenbeschreibung die erzielten Vorteile klar hervorgehen. Es weigen:
- Fig. 1: in schematischer Perspektive eine dreidimensionale Kombination in Verbindung mit zwei Magazinplatten,
- Fig. 2: eine Kombinationsplatte in Perspektive,
- Fig. 3: die Rückseite nach Fig. 2,
- Fig. 4: eine Längsseitenansicht nach Fig. 2 mit plaziertem CD-Etui,
- Fig. 5: die Vorderansicht einer geraden Verbindungslasche,
- Fig. 6: eine Seitenansicht nach Fig. 5 im Teilschnitt A-A bei gleichzeitiger Schnittdarstellung einer 90° -Winkellasche,
- Fig. 7: einen Schnitt B-B nach Fig. 3,
- Fig. 8: eine flache Kombination mit einem eingefügten winkelförmigen Magazin in schematischer Perspektive,
- Fig. 9: einen in der Ebene eines Knotenplättchens nach Fig. 8 geführten Schnitt bei mehrteilig hergestelltem winkelförmigem Magazin,
- Fig. 10: einen Schnitt durch eine mit alternativen Rastmitteln ausgeführte Verbindungsstelle zwischen Kombinationsplatte und Verbindungslasche und
- Fig. 11: die Vorderansicht einer Teillänge der Verbindungslasche nach Fig. 10.

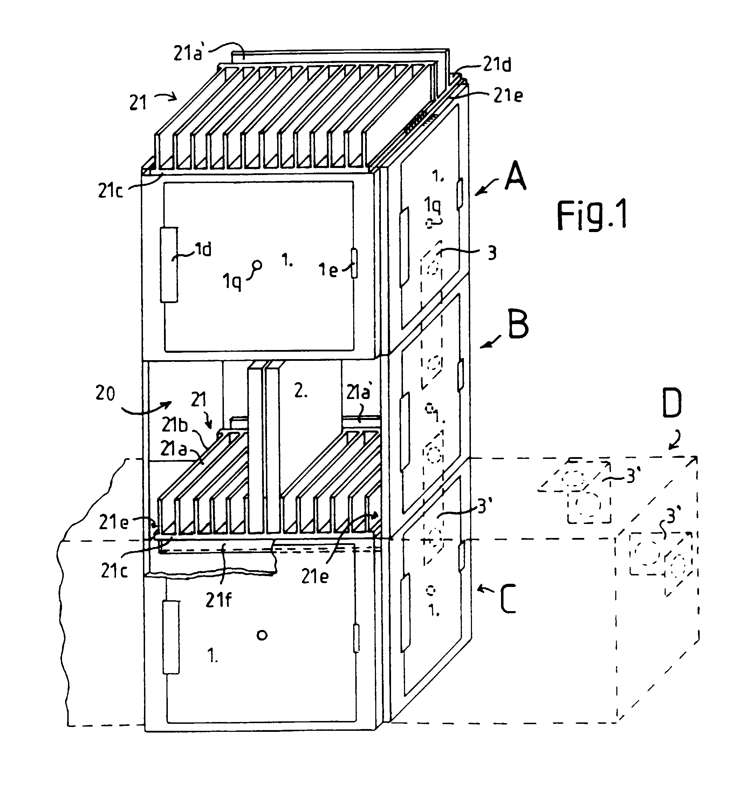

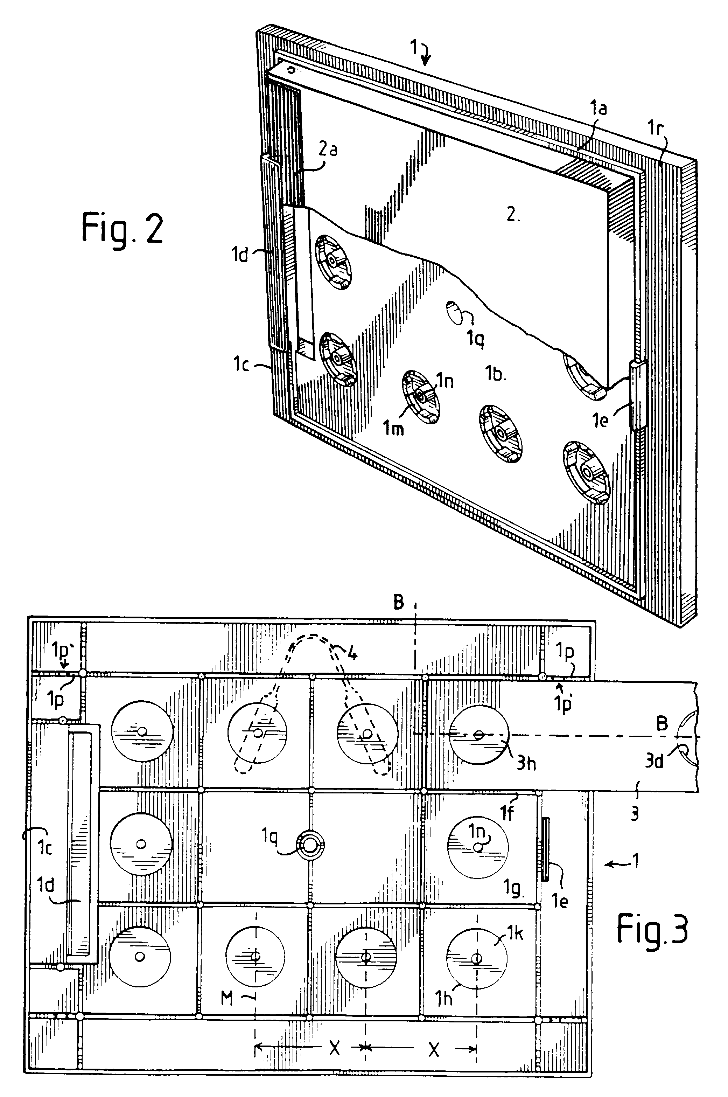

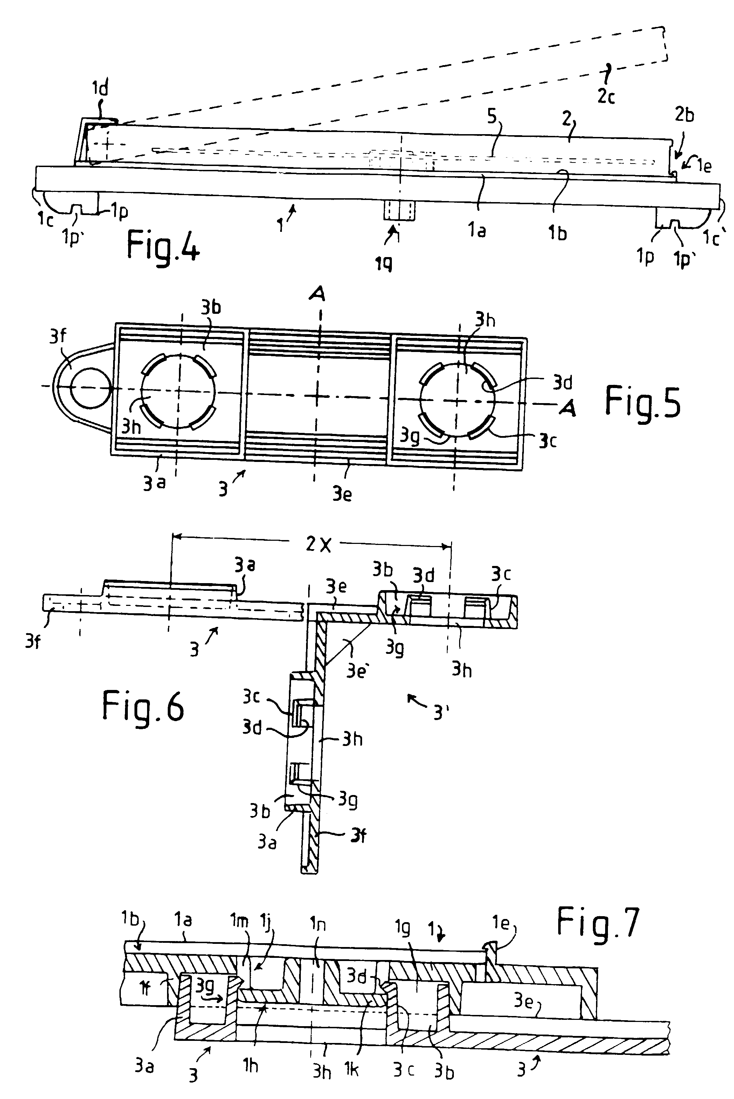

Fig. 1 zeigt in schematischer Darstellung eine im wesentlichen aus Kombinationsplatten 1 bestehende dreidimensionale Kombination. Sie setzt sich aus den quaderförmigen Einheiten A bis D zusammen. Jede Kombinationsplatte 1 ist dazu ausgebildet, aussenseitig in der in den Fig. 2 und 4 gezeigten Art ein CD-Etui 2 aufzunehmen. Als Verbindungsmittel für die Kombinationsplatten 1 bzw. quaderförmigen Einheiten A bis D dienen gradlinige und winkelförmige Verbindungslaschen 3, 3'. All diese Organe sind anhand der detaillierten Fig. 2 bis 7 genauer beschrieben.

Die rechteckige, längliche Kombinationsplatte 1 besitzt vorderseitig ein durch einen stegartigen Rahmen 1a umschlossenes Lagerbett 1b für ein CD-Etui 2. Parallel zur linken Plattenseitenkante 1c erhebt sich ein zur Plattenmitte hin offener, gegenüber den in gleicher Richtung verlaufenden Lagerbeltumfangsseiten kürzerer Winkel 1d zum Uebergriff des Scharnierbereichs 2a des CD-Etuis 2. Zum Winkel 1d parallel verlaufend und diesem gegenüberliegend besitzt die Kombinationsplatte 1 die niedere Rastzunge 1e zum Ueberrasten des entsprechenden Bereiches des leicht vorspringenden Bodenrandes 2b des CD-Etuis 2. 1r bezeichnet eine rahmenartige Strukturierung.

Rückseitig ist die Kombinationsplatte 1 durch angeformte Stege 1f in gleichgrosse Lagersitze 1g für Verbindungslaschen 3, 3' aufgeteilt. Diese besitzen ebenfalls durch Stege 3a gebildete, gegengleiche, d.h. bei erstellter Laschenverbindung (Fig. 3 und 7) in die Lagersitze 1g eingreifende Gegenlagersitze 3b. Zentrisch in ihren Lagersitzen 1g weist die Kombinationsplatte 1 die angeformten Hohlzapfen 1h auf, deren Seitenwandungen 1j unterhalb der Stirnwand 1k sich diametral gegenüberliegende Rastausnehmungen 1m besitzen. In Uebereinstimmung mit diesen sind die Laschen 3, 3' innerhalb ihrer Gegenlagersitze 3b mit gegengleichen, selbstfedernden, Hohlzapfen 3g bildenden Rastzungen 3C versehen, die mit vorspringenden Rastnocken 3d die Hohlzapfenstirnwände 1k innerhalb der Rastausnehmungen 1m untergreifen.

Zwischen ihren Gegenlagersitzen 3b sind die Verbindungslaschen 3, 3' mit stabilisierenden Längsrippen 3e, 3e' versehen, die bei erstellter Laschenverbindung oberhalb der Lagersitzstege 1f verlaufen. Die Bemessung der Rastzungen 3c erlaubt bei ausgezeichneter Rastwirkung ein weiches Ver- und Entrassten. Die Entrastung geschieht dank der untergreifbaren Laschenverlängerung 3f mühelos von Hand.

Die Verbindungslaschen 3, 3' besitzen zentrisch innerhalb ihrer Gegenlagersitze 3b noch die Durchbrechungen 3h.

Die Hohlzapfen 1h der Kombinationsplatte 1 sind mit zentrischen Einsteckbohrungen 1n versehen, in denen eine Zapfenschnur 4 (Fig. 3) mittels elastischer Einsteckzapfen (verdeckt liegend) beliebig befestigbar ist (auch als Brücke zwischen benachbarten Kombinationsplatten 1 einer Kombination). Dank der Laschendurchbrechungen 3h kann die Zapfenschnur 4 auch in Einsteckbohrungen 1n solcher Lagersitze 1g eingesteckt werden, die durch eine Verbindungslasche 3 bzw. 3' besetzt sind.

Aus den Fig. 3 und 4 ist noch ersichtlich, dass die in den Eckbereichen der Kombinationsplatte 1 auslaufenden Rippenbereiche 1p als Abstandsfüsse erhöht sind. Sie sind mit Einbuchtungen 1p' versehen. Bei mehreren zu einer Verkaufseinheit gestapelten Kombinationsplatten 1 findet der stegartige Rahmen la des Lagerbetts 1b der jeweils unteren Kombinationsplatte 1 in den Fusseinbuchtungen der jeweils darüberliegenden Kombinationsplatte 1 Halt. Die Platten sind somit relativ zueinander lagegesichert.

Beliebige in Reihe liegende Lagersitze 1g haben einen gegenseitigen von Mittellinie zu Mittellinie M gemessenen Abstand von nX, worin n eine ganze Zahl ist. Ausserdem sind die Lagersitze 1g sowie die Gegenlagersitze 3b derart funktionssymmetrisch ausgebildet, dass sich eine Verbindungslasche 3, 3' insbesondere in den Eckbereichen der Kombinationsplatte 1 in zwei zueinander senkrechten Richtungen plazieren lässt.

Dadurch lassen sich die Kombinationsplatten 1 in waagerechter und senkrechter Richtung aussergewöhnlich vielseitig - d.h gradlinig sowie um ein beliebiges Abstandsmass nX der Lagersitze 1g versetzt - aneinanderfügen.

Die Manipulation der CD-Etuis und der Compact-Discs ist äusserst einfach und vorteilhaft:

Ein CD-Etui 2 wird mit seinem Scharnierbereich 2a zunächst schräg unter den Winkel 1d geschoben und dann in das Lagerbett 1b eingeklipst. Infolge der Verrastung der Rastzunge le oberhalb des Etuibodenrandes 2b und der Längenbemessung des Winkels 1d, lässt sich der Etuideckel 2c öffnen und die Compact-Disc 5 entnehmen, ohne das CD-Etui selbst deplazieren zu müssen. Soll jedoch das CD-Etui 2 entnommen bzw. gegen ein anderes gewechselt werden, so wird es etwas nach links gegen den selbstfedernden Winkel 1d geschoben und von rechts her aus dem Lagerbett 1b herausgekippt.

Natürlich lässt sich eine Kombinationsplatte auch in grösserer Ausbildung sogleich mit mehreren neben- und/oder untereinander liegenden Lagerbetten 1b versehen. Das ergibt allerdings gröbere Kombinationen.

Wie aus Fig. 1 noch hervorgeht, wurde bei der quaderförmigen Einheit B vorderseitig auf die Plazierung der entsprechenden Kombinationsplatte verzichtet, wodurch sich der zugängliche Raum 20 ergibt. In diesem ist unten die mit parallelen, von Rippen 21b gebildeten Einschubkanälen 21a versehene Magazinplatte 21 angeordnet.

Mit einer gleichen Magazinplatte 21 ist die oberste quaderförmige Einheit A oberseitig abgedeckt. Einschubseitig liegen die Magazinplatten 21 in ganzer Breite mit ihrem Rand 21c und rückseitig mit in ihren hinteren Eckbereichen angeformten Lappen 21d auf Rändern der Kombinationsplatten 1 auf. Breite und Tiefe der Magazinplatte 21 sind so bemessen, dass rechts, links und hinten zwischen dieser und den Kombinationsplatten 1 Abstandsschlitze für senkrecht angeordnete Verbindungslaschen 3 verbleiben, die ihrerseits übereinander angeordnete, quaderförmige Einheiten B, C miteinander verbinden. Die seitlichen Abstandsschlitze sind mit 21e bezeichnet, wogegen der hintere, sich zwischen den Lappen 21d erstreckende Schlitz verdeckt liegt.

Zwecks horizontaler Lagerung der Magazinplatten 21 sind diesen nach unten in die jeweiligen quaderförmigen Einheiten A, C hineinragende Stege 21f angeformt.

Mit einem hinteren, quer verlaufenden Einschubkanal 21a' ist die Magazinplatte 21 vollflächig ausgenutzt. Seine Benutzung ist allerdings nur bei einer als Abdeckung benutzten Magazinplatte 21 sinnvoll.

In den Einschubkanälen 21a sind zwei CD-Etuis 2 plaziert. Auf diese Weise lassen sich also beliebige Räume einer beliebigen quaderförmigen Kombination zur zusätzlichen Unterbringung von CD-Etuis ausnutzen. Weiterhin ist denkbar, die Magazinplatte 21 mit schmäleren Einschubkanälen zu versehen, wodurch sich eine erheblich grössere Anzahl un- bzw. in folienartigen Etuis verpackter Compact-Discs in den Raum 20 einschieben liesse.

Für eine waagerechte Lagerung von CD-Etuis im Raum 20 wäre seitlich in diesem wenigstens eine Magazinplatte aufrecht anzuordnen.

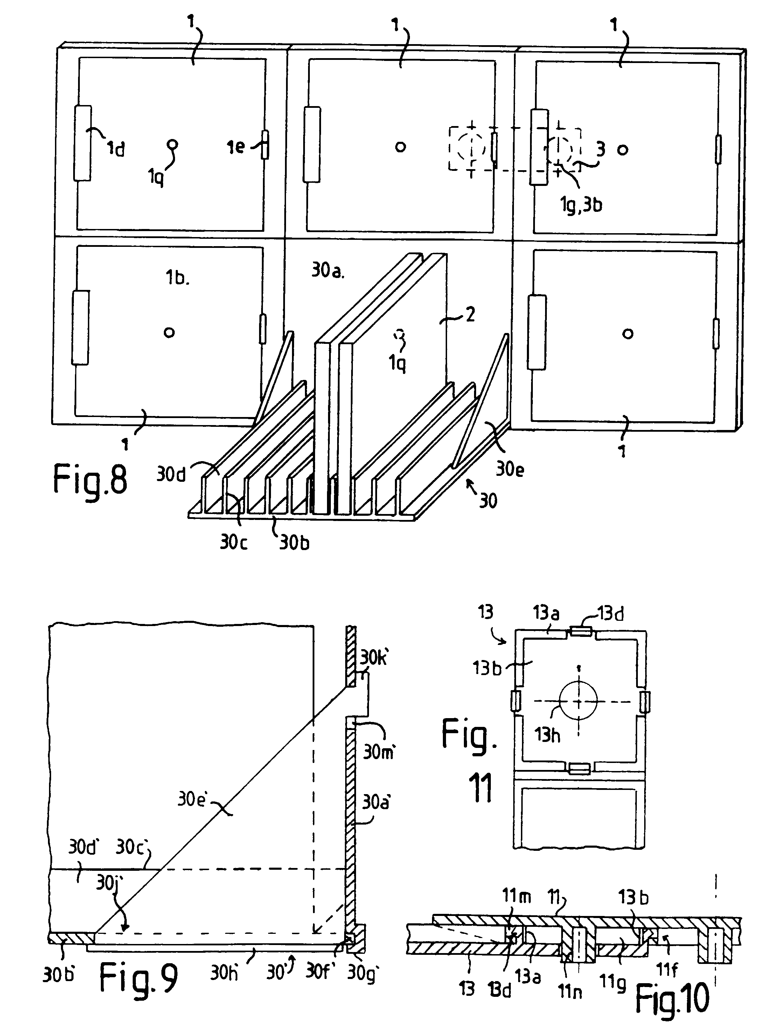

Fig. 8 zeigt in schematischer Darstellung eine flache, an einer Wand zu plazierende Kombination aus fünf Kombinationsplatten 1. Diese sind in vorher beschriebener Art ausgebildet. Sie besitzen also vorderseitig je ein Lagerbett 1b für ein CD-Etui und zu dessen zustätzlicher Lagesicherung einen Winkel 1d sowie eine Rastzunge 1e. Die rückseitigen Laschenverbindungen liegen verdeckt. Eine dieser von zwei Lagersitzen 1g und einer gradlinigen Verbindungslasche 3 mit ihren Gegenlagersitzen 3b gebildeten Verbindungen ist gestrichelt angedeutet.

Mittig in der unteren Reihe ist ein winkelförmig ausgebildetes Etui-Magazin 30 plaziert. Der hintere, aufrechte Magazin schenkel 30a weist die Grösse einer Kombinationsplatte 1 auf, ist rückseitig in gleicher Weise mit Lagersitzen 1g für Verbindungslaschen 3 versehen (nicht dargestellt bzw. verdeckt liegend) und mittels dieser in der Art der Kombinationsplatten 1 in die Kombination eingefügt. Der waagerecht ausladende Magazinschenkel 30b besitzt durch parallele Rippen 30c gebildete Einschubkanäle 30d für CD-Etuis. Die in der Art von Knotenblechen vorgesehenen Plättchen 30e dienen der Versteifung des winkelförmigen Magazins.

Da das Gewicht einer grösseren flachen Kombination - insbesondere einer solchen mit eingebauten winkelförmigen Magazinen - die Zugfestigkeit einer Zapfenschnur 4 (Fig. 3) überfordert, besitzen sowohl die Kombinationsplatte 1 als auch der aufrechte Schenkel 30a des winkelförmigen Magazins 30 eine mittig angeordnete Schrauben-Durchtrittsbohrung lq (siehe auch Fig. 2 bis 4). Indem die Kombination bzw. ein Teil derselben zunächst mittels einer Zapfenschnur 4 aufgehängt wird, lassen sich die meistens erforderlichen Dübelbohrungen problemlos auf der Wand anzeichnen.

Fig. 9 zeigt anhand einer schematischen Schnittdarstellung, dass das winkelförmige Magazin 30' zwecks kostensparender Versandpackungen auch als Bausatz fertigbar ist, wobei die flachen Einzelteile vom Verbraucher zusammensetzbar sind. Diese bestehen aus der den ausladenden waagerechten Magazinschenkel bildenden, die Einschubkanäle 30d' aufweisenden Platte 30b', der den hinteren aufrechten Magazinschenkel bildenden Platte 30a' und den beiden Knotenplättchen 30e'. Die waagerechte Platte 30b' stützt sich mit ihrem hinteren Randbereich 30f' auf einem vorspringenden Randsteg 30g' der senkrechten Platte 30a' ab. Die unten mit einem Auflagerand 30h' versehenen Knotenplättchen 30e' ragen durch Montageschlitze 30j' der waagerechten Platte 30b' hindurch und oben mit hakenartigen Anformungen 30k' durch Oeffnungen 30m' der aufrechten Platte 30a', um diese zu hintergreifen. Es handelt sich bei diesem Ausführungsbeispiel um eine besonders versand- und kundenfreundliche Lösung, da die Einzelteile einen minimalen Raum beanspruchen und einfachst zusammensteckbar sind. Es wäre natürlich möglich, die Knotenplättchen 30e' der waagerechten Platte 30b' direkt anzuformen.

Anhand der Fig. 10 und 11 ist noch dargestellt, dass die zwischen den Kombinationsplatten 1 (bzw. den Magazinplatten 21 resp. winkelförmigen Magazinen 30) einerseits und den Verbindungslaschen 3, 3' andererseits wirkenden Rastmittel alternative Ausbildungen zulassen. Sie sind hier an den die Lagersitze 11g der Kombinationsplatte 11 bildenden Stegen 11f und den die Gegenlagersitze 13b der Verbindungslasche 13 bildenden Stegen 13a vorgesehen. Die Lagersitzstege 11f der Kombinationsplatte 11 besitzen die Rastausnehmungen 11m, in die die Rastvorsprünge 13d der die Gegenlagersitze 13b bildenden Stege 13a selbstfedernd eingreifen. Zwecks Befestigung einer Zapfenschnur 4 (siehe Fig. 3) sind die Lagersitze 11g der Kombinationsplatte 11 mit den Einsteckbohrungen 11n und die Gegenlagersitze 13b der Verbindungslasche 13 mit den Durchbrechungen 13h versehen.

## Patentansprüche

1. Kombinationssystem zur Aufnahme von in Scharnierdeckel-Etuis (2), nachfolgend kurz CD-Etuis genannt, verpackten Compact-Discs (5), welches rechteckige Kombinationsplatten (1) und zu deren gegenseitiger Befestigung laschenartige Verbindungsmittel (3) aufweist, wobei die Kombinationsplatten (1) vorderseitig mit winkelartigen, lagerbett-bildenden Anformungen (1d, 1e) zur Lagesicherung der CD-Etuis (2) versehen sind, dadurch gekennzeichnet, dass den Kombinationsplatten (1) vorderseitig je jeweils für nur ein CD-Etui bemessenes Lagerbett (1b) entlang einer Lagerbettumfangsseite ein vorspringender, zum Lagerbett (1b) hin offener und in seiner Längsrichtung gegenüber der Länge genannter Lagerbettumfangsseite beidseitig kürzerer Winkel (1d) zum Uebergriff eines scharnierseitigen Randbereichs (2a) eines plazierten CD-Etuis (2) angeformt ist, während sich im Bereich der zum genannten Winkel (1d) parallelen Lagerbettumfangsseite eine zum Lagerbett (1b) hin wirkende Rastzunge (1e) zum Uebergriff eines vorspringenden Bodenrandes (2b) des CD-Etuis (2) befindet, und dass die Kombinationsplatten (1) rückseitig im Bereich einer jeden Seitenkante wenigstens einen angeformten Lagersitz (1g) für mit Gegenlagersitzen (3b) versehene Verbindungslaschen (3, 3') aufweist, wobei teils den Lagersitzen (1g) und teils den Gegenlagersitzen (3b) in der Art von Vor- und Rücksprüngen (3d, 1m) miteinander korrespondierende, selbstfedernd wirkende Rastverbindungen bildende Rastmittel angeformt sind.

2. Kombinationssystem nach Anspruch 1 dadurch gekennzeichnet, dass die Verbindungslaschen zwecks Kombinierens der Kombinationsplatten (1) zu dreidimensionalen Raumformen als Winkellaschen (3') ausgebildet sind.

3. Kombinationssystem nach einem der Ansprüche 1 und 2 bis 3, dadurch gekennzeichnet, dass die Kombinationsplatte (1) pro Seitenkante mit einer Mehrzahl von Lagersitzen (1g) versehen ist, welche einen gegenseitigen Abstand von nX aufweisen, wobei n eine ganze Zahl ist.

4. Kombinationssystem nach einem der Ansprüche 1 bis 3, dadurch gekennzeichnet, dass die Lagersitze (11g) und die Gegenlagersitze (13b) von Stegen (11f bzw. 13a) umschlossen sind, welche ihrerseits Vor- und Rücksprünge (13d bzw. 11m) der selbstfedernden Rastverbindungen aufweisen.

5. Kombinationssystem nach einem der Ansprüche 1 bis 3, dadurch gekennzeichnet, dass die Lagersitze (1g) und die Gegenlagersitze (3b) von Stegen (1f bzw. 3a) umschlossen sind und mit sich gegenseitig übergreifenden, ringsherum mit aus Vor- und Rücksprüngen (3d bzw. 1m) bestehenden Rastmitteln versehenen, hohlzapfenförmigen Anformungen (1h, 3g) bestückt sind, die wenigstens teilweise aus selbstfedernden Segmenten (3c) bestehen.

6. Kombinationssystem nach einem der Ansprüche 1 bis 5, dadurch gekennzeichnet, dass den Kombinationsplatten (1) in ihren rückseitigen Randbereichen stegartige Abstandsfüsse (1p) angeformt sind, welche im Randabstand vorderseitiger Lagerbettstege (1a) mit Stapel-Einbuchtungen (1p') versehen sind.

7. Kombinationssystem nach einem der Ansprüche 1 bis 6, dadurch gekennzeichnet, dass eine aus wenigstens einer quaderförmigen, aus rechtwinklig aneinandergefügten Kombinationsplatten (1) bestehende Kombinationseinheit (B) durch Verzicht auf eine senkrechte Kombinationsplatte einen seitlich zugänglichen Raum (20) aufweist, und dass wenigstens in einer der sich senkrecht zur Oeffnung des Raumes (20) erstreckenden, diesen umschliessenden Ebenen eine mit zueinander parallelen Einschubkanälen (21a) versehene Magazinplatte (21) zwecks zusätzlicher Plazierung von CD-Etuis (2) angeordnet ist.

8. Kombinationssystem nach Anspruch 7, gekennzeichnet durch eine bei quaderförmigen Kombinationen als waagerechtes Zwischen- oder Abdeckorgan zu plazierende Magazinplatte (21), welche so bemessen ist, dass zwischen ihr und den sie umgebenden senkrechten Kombinationsplatten (1) der entsprechenden quaderförmigen Kombinationseinheiten (A bis C) Abstandsschlitze (21e) zum Durchtritt von Verbindungslaschen (3) verbleiben.

9. Kombinationssystem nach einem der Ansprüche 1 bis 6, gekennzeichnet durch ein winkelförmiges Magazin (30) zum Einfügen in einen flachen Verband von Kombinationsplatten (1), wobei ein Magazinschenkel (30b) winkelinnenseitig mit parallelen Einschubkanälen (30d) für CD-Etuis (2) versehen ist, während der andere Magazinschenkel (30a) die Grösse einer Kombinationsplatte (1) aufweist und rückseitig mit gleichen Lagersitzen (wie 1g) für Verbindungslaschen (3) bestückt ist.

10. Kombinationssystem nach Anspruch 9, dadurch gekennzeichnet, dass die beiden Magazinschenkel (30a, 30b) separate, vom Verbraucher zusammenzufügende Bauteile darstellen.

## Claims

1. A combination system for receiving compact discs (5) packaged in hinged-lid cases (2), hereinafter referred to as CD-cases for the sake of brevity, which has rectangular combination plates (1) and bar-like connecting means (3) for mutually fixing them, wherein the combination plates (1) are provided at the front side with angular, storage bedforming portions (1d, 1e) formed thereon for securing the CD-cases (2) in position, characterised in that formed on the combination plates (1) at the front side per respective storage bed (1b) which is allocated for only one CD-case along a storage bed peripheral side is a projecting angle (1d) which is open towards the storage bed (1b) and which is shorter in its longitudinal direction with respect to the length of said storage bed peripheral side at both sides, for engaging over a hinge-side edge region (2a) of a placed CD-case (2), while disposed in the region of the storage bed peripheral side which is parallel to said angle is a retaining tongue (1e) which acts towards the storage bed (1b) for engaging over a projecting bottom edge (2b) of the CD-case (2), and that the combination plates (1) have at the rear in the region of each side edge at least one mounting seat (1g) formed thereon for connecting bars (3, 3') provided with counterpart mounting seats (3b), wherein formed in part on the mounting seats (1g) and in part on the counterpart mounting seats (3b) are retaining means which correspond to each other, in the manner of projections and recesses (3d, 1m), and which form retaining connections which have a self-resilient action.

2. A combination system according to claim 1 characterised in that the connecting bars are in the form of angle bars (3') for the purposes of combining the combination plates (1) to afford three-dimensional spatial shapes.

3. A combination system according to one of claims 1 and 2 characterised in that the combination plate (1) is provided for each side edge with a plurality of mounting seats (lg) which are at a mutual spacing of nX, wherein n is an integer.

4. A combination system according to one of claims 1 to 3 characterised in that the mounting seats (11g) and the counterpart mounting seats (13b) are enclosed by web portions (11f and 13a respectively) which in turn have projections and recesses (13d and 11m respectively) of the self-resilient retaining connections.

5. A combination system according to one of claims 1 to 3 characterised in that the mounting seats (1g) and the counterpart mounting seats (3b) are enclosed by web portions (1f and 3a respectively) and are provided with portions (1h, 3g) which are in the form of hollow projections and which engage one over the other and which are provided all around with retaining means comprising projections and recesses (3d and lm respectively) and which at least partially comprise self-resilient segments (3c).

6. A combination system according to one of claims 1 to 5 characterised in that formed on the combination plates (1) in their rear edge regions are flange-like spacer feet (1p) which are provided with stacking recesses (1p') in the edge region of storage bed flange portions (1a) at the front side.

7. A combination system according to one of claims 1 to 6 characterised in that by virtue of the omission of a perpendicular combination plate an arrangement comprising at least one cuboidal combination unit (B) comprising combination plates (1) which are joined together in right-angled relationship has a laterally accessible space (20), and that a magazine plate (21) provided with mutually parallel insertion passages (21a) is arranged at least in one of the planes which extend perpendicularly to the opening of the space (20) and which extend around same, for additionally positioning CD-cases (2).

8. A combination system according to claim 7 characterised by a magazine plate (21) which is to be placed in cuboidal combinations as a horizontal intermediate or cover member and which is so dimensioned that spacer slots (21e) for connecting bars (3) to pass therethrough remain between the magazine plate (21) and the perpendicular combination plates (1), surrounding same, of the corresponding cuboidal combination units (A to C).

9. A combination system according to one of claims 1 to 6 characterised by an angular magazine (30) for insertion into a flat assembly of combination plates (1), wherein a magazine limb (30b) is provided at the inside of the angle with parallel insertion passages (30d) for CD-cases while the other magazine limb (30a) is of the same size as a combination plate (31) and is provided at the rear with identical mounting seats (such as lg) for connecting bars (3).

10. A combination system according to claim 2 characterised in that the two magazine limbs (30a, 30b) represent separate components which are to be assembled by the consumer.

## Revendications

1. Système à éléments combinés destiné à recevoir des disques compacts (5) emballés dans des étuis (2) à couvercle à charnière, ci-après dénommés en abrégé étuis à CD, système qui comporte des panneaux combinés rectangulaires (1) et des moyens de raccordement du type éclisses (3) pour leur fixation mutuelle, les panneaux combinés (1) étant pourvus, sur leur face avant, d'appendices de forme angulaire (1d, 1e) délimitant un socle d'appui, en vue du blocage des étuis à CD (2) dans leur position, caractérisé en ce que, sur la face avant des panneaux combinés (1) et pour chaque socle d'appui (1b) dimensionné pour un seul étui à CD, il est formé, le long d'un côté du pourtour du socle d'appui, un élément angulaire saillant (1d), ouvert en direction du socle d'appui (1b) et plus court dans le sens de sa longueur, des deux côtés, que la longueur dudit côté du pourtour du socle d'appui, afin de s'engager sur une partie de bord (2a), située côté charnière, d'un étui à CD (2) mis en place, tandis que dans la région du côté du pourtour du socle d'appui parallèle audit élément angulaire (1d), se trouve une languette d'encliquetage (1e) exerçant son action en direction du socle d'appui (1b) et destinée à s'engager sur un rebord saillant (2b) du fond de l'étui à CD (2), et en ce que, sur leur face arrière et dans la région de chaque bord latéral, les panneaux combinés (1) comportent, formé d'une pièce avec eux, au moins un siège d'appui (1g) pour des éclisses de raccordement (3, 3') pourvues de sièges conjugués d'appui (3b), des moyens d'encliquetage, qui définissent des connecteurs à encliquetage se correspondant mutuellement et agissant de par leur élasticité intrinsèque, étant aménagés sous la forme de saillies et de renfoncements (3d, 1m), d'une part, sur les sièges d'appui (1g) et, d'autre part, sur les sièges conjugués d'appui (3b).

2. Système à éléments combinés selon la revendication 1, caractérisé en ce que les éclisses de raccordement sont réalisées sous la forme d'éclisses coudées (3') en vue d'une combinaison des panneaux (1) en des formes spatiales tridimensionnelles.

3. Système à éléments combinés selon l'une des revendications 1 et 2, caractérisé en ce que le panneau combiné (1) est pourvu, pour chaque bord latéral, de plusieurs sièges d'appui (1g), qui présentent un intervalle mutuel de nX, n étant un nombre entier.

4. Système à éléments combinés selon l'une des revendications 1 à 3, caractérisé en ce que les sièges d'appui (11g) et les sièges conjugués d'appui (13b) sont entourés par des nervures (11f ou 13a) qui, de leur côté, comportent les saillies et renfoncements (13d ou 11m) des connecteurs à encliquetage à élasticité intrinsèque.

5. Système à éléments combinés selon l'une des revendications 1 à 3, caractérisé en ce que les sièges d'appui (1g) et les sièges conjugués d'appui (3b) sont entourés par des nervures (1f ou 3a) et sont munis d'appendices en forme de tenons creux (1h, 3g), qui s'engagent mutuellement l'un sur l'autre tout en étant pourvus, sur leur pourtour, de moyens d'encliquetage constitués par des saillies et des renfoncements (3d ou 1m), et qui sont constitués, au moins en partie, par des segments à élasticité intrinsèque (3c).

6. Système à éléments combinés selon l'une des revendications 1 à 5, caractérisé en ce que sur les panneaux combinés (1), sont formés, dans les parties de bord de leur face arrière, des pieds d'écartement en forme de nervure (1p) qui sont pourvus de gorges d'empilage (1p'), suivant l'écartement bord à bord de nervures (1a) du socle d'appui formées sur la face avant.

7. Système à éléments combinés selon l'une des revendications 1 à 6, caractérisé en ce qu'au moins une unité combinée parallélépipédique (B), constituée de panneaux combinés (1) joints l'un à l'autre à angle droit, présente un compartiment (20) accessible par le côté, consécutivement à la suppression d'un panneau combiné vertical, et en ce qu'un panneau à magasin (21), pourvu de canaux d'insertion (21a) parallèles entre eux, est disposé au moins dans l'un des plans s'étendant perpendiculairement à l'ouverture du compartiment (20) et entourant ce dernier, en vue de la mise en place d'étuis à CD (2) supplémentaires.

8. Système à éléments combinés selon la revendication 7, caractérisé par un panneau à magasin (21) qui, dans le cas de combinaisons de forme parallélépipédique, est destiné à être mis en place comme élément intercalaire ou de couverture horizontal et qui est dimensionné d'une façon telle, qu'entre lui et les panneaux combinés verticaux (1), placés autour, des unités combinés parallélépipédiques correspondantes (A à C), il subsiste des fentes d'écartement (21e) pour le passage d'éclisses de raccordement (3).

9. Système à éléments combinés selon l'une des revendications 1 à 6, caractérisé par un magasin de forme angulaire (30) destiné à être intégré dans un assemblage plan de panneaux combinés (1), une branche (30b) du magasin étant alors pourvue, du côté de l'intérieur de l'angle, de canaux d'insertion parallèles (30d) pour des étuis à CD (2), tandis que l'autre branche (30a) du magasin présente la taille d'un panneau combiné (1) et est munie, sur la face arrière, de sièges d'appui identiques (comme 1g) pour des éclisses de raccordement (3).

10. Système à éléments combinés selon la revendication 9, caractérisé en ce que les deux branches (30a, 30b) du magasin constituent des éléments de construction séparés, destinés à être assemblés par l'utilisateur.
